# EUROPEAN PATENT SPECIFICATION

(11) **EP 1 201 834 B1**
(45) Date of publication and mention of the grant of the patent: **22.11.2006**
(21) Application number: 01500254.6
(22) Date of filing: 24.10.2001
(51) Int. Cl.: E03B 1/04, E03B 3/03

(54) **Device for domestic exploitation of rain water**
Vorrichtung zur häuslichen Verwendung von Regenwasser
Dispositif d'utilisation domestique de l'eau de pluie

(30) Priority: 26.10.2000 ES 200002570
(43) Date of publication of application: 02.05.2002
(73) Proprietor: Bogemar, S.L., 17820 Banyoles (ES)
(72) Inventor: Pages Pages, Josep, 17820 Banyoles (ES)
(74) Representative: SUGRANES - VERDONCES - FERREGÜELA

(56) References cited:
- DE-A- 19 624 219
- DE-A- 19 811 920
- US-A- 5 496 468

## Description

### Technical sector of the invention.-

The object of the invention is a device for the domestic exploitation of rain water, which is preferably applicable in single-family housing and generally in those facilities where it is envisaged that rain water may be exploited for such purposes as, for example, the watering of landscaped areas, washing in general and flushing out sanitary fittings, such as toilets.

### Background to the invention.-

Embodiments of devices for the domestic exploitation of rain water are known. Generally, the object of such embodiments is the exploitation of rain water stored in a water tank for the above-mentioned purposes.

Briefly, the known embodiments of devices for the domestic exploitation of rain water comprise the following elements: an auxiliary tank for storing a certain amount of water, such as, for example, drinking water from a mains network, the purpose of which is to ensure the supply of water to installations connected to the device, assuming there were a lack of rain water available in the rain water tank; a hydraulic pump for circulating water from the rain water storage tank or from the auxiliary tank towards the points of consumption; a circulation control valve or valves of the rain water or drinking water; filling means of the auxiliary tank; a drain; a control device for operating the machine; and a receptacle where the totality of said elements are located.

Document DE-A-196 24 219 refers to a water system that involves a pump in a housing which supplies a consumer unit normally utilising rainwater. It has monitoring valves that change the system over between rain and mains water. There is also a common housing which accommodates the mains water feed equipment and pump. The housing can also contain the monitoring valves, and can form the pump housing. It can also contain all the controls, and a buffer tank. The main drawback of the structure in all the cases of the earlier described devices for the exploitation of rain water lies in their large size, as well as assembly and maintenance difficulties.

### Explanation of the invention.

The device for the domestic exploitation of rain water object of the invention, is of the type which comprises a vertical tank closed at both ends; filling means of the vertical tank with water from a mains network, for example, a drinking water mains network; and a drain.

The device for the domestic exploitation of rain water according to the invention is characterised in that the tank is provided with a submersible hydraulic pump, operated by an electric motor with which it makes up a functional unit completely housed inside the vertical tank, whose suction inlet goes through the tank bottom cover, whereas the drive outlet goes through the tank top cover; in that it comprises a three-way electro-valve, arranged below the bottom cover (3) of the tank, in which the first channel connects hydraulically with the inside of the tank via its bottom cover, the second channel is adapted for the connection to a rain water pipe which is connected to a rainwater tank, and the third channel connects hydraulically with the suction inlet of the pump; and in that it comprises a control device that acts on the three-way electro-valve so that given that there is rain water available in the rain water tank, it establishes hydraulic connection between the second and third electro-valve channels, whereas otherwise, it establishes hydraulic connection between the electro-valve's first and third channel, feeding the hydraulic pump with water from the vertical tank.

Another feature of the device for the domestic exploitation of rain water according to the invention consists of the fact that the hydraulic pump is a multi-cellular pump.

According to another feature of the device according to the invention, the tank filling means are provided with a two-channel valve, an inlet one and an outlet one, situated inside the vertical tank, the inlet channel being adapted for the hydraulic connection with said mains network going through the top cover of the vertical tank, whilst the outlet channel freely flows into the tank interior.

According to another feature of the invention, the two-channel valve is operated by a ball cock adapted for opening and closing the valve when the vertical tank water level reaches a pre-set minimum and maximum value respectively.

According to another feature of the invention, the outlet of the two-channel valve is situated above the vertical tank maximum water level set by the ball cock.

According to another feature of the device for the domestic exploitation of rain water object of the invention, the outflow pipe comprises a vertical tubular conduit inside the tank, whose top end is situated above the vertical tank maximum water level set by the ball cock, whereas its bottom end goes through the tank's bottom cover.

Another feature of the device for the domestic exploitation of rain water according to the invention, consists of the lower end of the vertical tubular conduit of the drain being provided with anti-return means.

According to another feature of the device for the domestic exploitation of rain water according to the invention, at the drive outlet of the hydraulic pump a control device is arranged for the operating of the hydraulic pump motor.

According to another feature of the device for the domestic exploitation of rain water according to the invention, the control device is provided with detecting means for the existence of the water flow, adapted for causing the pump motor to stop when the water flow is zero or lower than a predetermined value and pressure control means.

Another feature of the device for the domestic exploitation of rain water according to the invention consists of the pressure control means being adapted for making the pump motor start when the water pressure reaches a minimum predetermined value.

### Brief description of the drawings.

In the attached drawings, the device for the domestic exploitation of rain water object of the invention is shown, by way of non-limiting example. In said drawings:

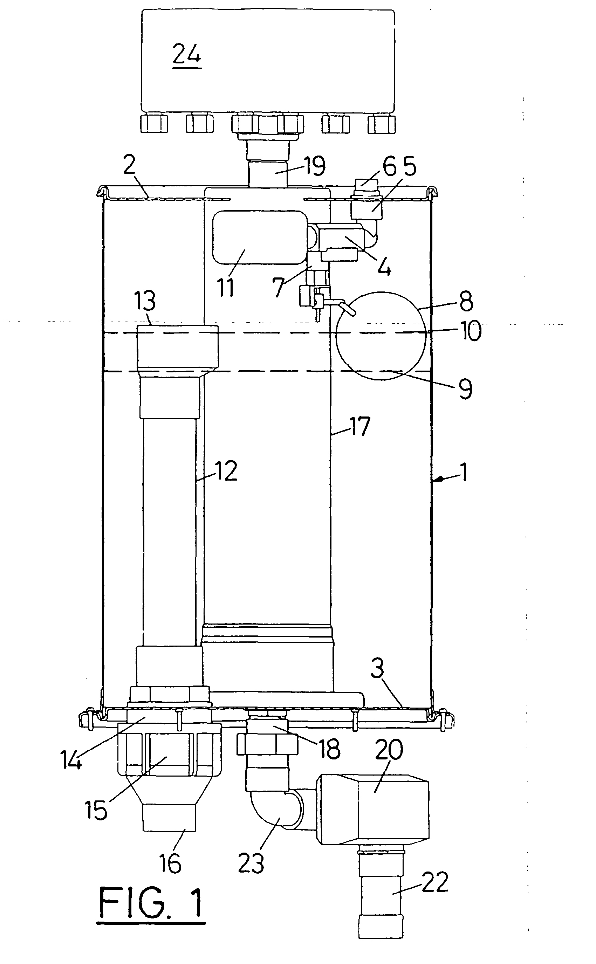

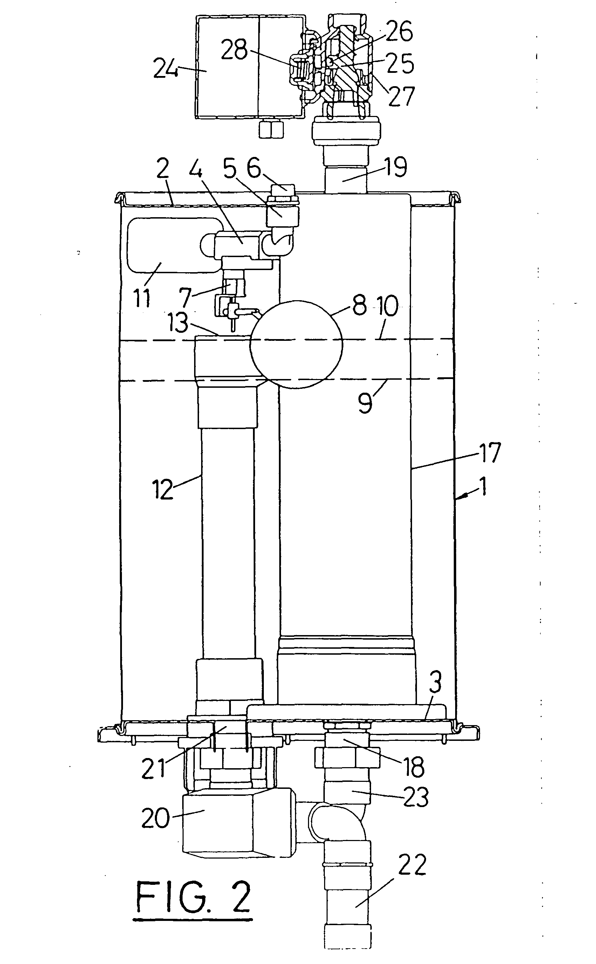

Figs. 1 and 2 are side and frontal elevation and sectional views, respectively of the device for the domestic exploitation of rain water according to the invention.

### Detailed description of embodiment examples.

As has been pointed out earlier, in Figs. 1 and 2 the device for the domestic exploitation of rain water object of the invention is shown. The description that follows refers to said two figures indistinctly.

The device comprises a vertical tank 1, closed at both ends by a top cover 2 and a bottom cover 3, which inside, is provided with drinking water filling means, for example drinking water from the mains, which comprises a two-way valve 4; an inlet 5 and an outlet 7 respectively.

The inlet 5 goes through the vertical tank 1 top cover 2 and has a connector 6 adapted for the connection of piping (not shown) of said mains, and the outlet 7 flows freely into the vertical tank 1.

The two-way valve 4 is controlled by a ball cock 8, so that when the water level inside vertical tank 1 reaches a minimum predetermined level, shown by the lines 9, the position of the ball cock 8 causes the two-way valve 4 to open, whereas when the water level inside vertical tank 1 reaches a maximum predetermined value, indicated by the lines 10, the position of the ball cock 8 causes the two-way valve 4 to close, so the water level inside the vertical tank 1 is permanently and automatically comprised between said minimum and maximum levels.

The outlet 7 is arranged above the maximum pre-set level 10. Furthermore, in this embodiment example the two-way valve 4 has a diffuser 11 to absorb the noises produced by the water passing through the valve.

The interior of vertical tank 1 has an outflow pipe, made up of a vertical tubular conduit 12, the top end of which is arranged above the maximum pre-set level 10, whereas its bottom end 14 goes through the bottom cover 3 of the vertical tank 1 and connects with anti-return means 15, whose outlet 16 connects hydraulically with a discharge pipe, not shown.

Likewise, the vertical tank 1 has a multi-cellular pump inside, to which an electric motor is co-axially coupled, defining a suction-drive functional unit 17, in which the suction inlet 18 of the functional unit 17 goes through the bottom cover 3 of the vertical tank 1, whereas the drive outlet 19 goes through the top cover 2.

Below the bottom cover 3 of the vertical tank 1 a three-way electro-valve 20 is arranged comprising a first channel 21, a second channel 22 and a third channel 23. The first channel 21 connects with the inside of vertical tank 1 hydraulically via its bottom cover (see Fig. 2); the second channel 22 hydraulically links the three-way electro-valve 20 with the rain water tank by piping, not shown; and the third channel 23 hydraulically links the three-way electro-valve 20 with the suction inlet 18 of the functional unit 17.

The drive outlet 19 has an operating control device 24 of the hydraulic pump motor of functional unit 17, said control being done so that:
a) if there is rain water in the rain water tank, the operating control device 24 establishes hydraulic connection between the second channel 22 and the third channel 23 of the electro-valve 20, that is to say, hydraulic connection between the suction inlet 18 of the functional unit 17 and the rain water tank is established; and
b) if there is no rain water available in the rain water tank, the operating control device 24 establishes hydraulic connection between the first channel 21 and the third channel 23 of the electro-valve 20, that is to say, hydraulic connection between the inside of vertical tank 1 and the suction inlet 18 of the functional unit 17 is established, the water flow being supplied in either case, from rain water or from the mains, which the points of consumption require.

The operating control device 24 has detecting means for the existence of the water flow comprising a check valve 25 equipped with a permanent magnet 26 linked to a reed relay, not shown, integral to the body of the valve 27 (Fig. 2), all of it being adapted so that when the water flow is zero or less than a predetermined value, the stoppage of the electro-motor of the hydraulic pump of the functional unit 17 takes place. Furthermore, the operating control device 24 has pressure control means comprising a pressure switch 28 (Fig. 2), adapted so that the electro-motor hydraulic pump of the functional unit 17 starts up when the water pressure reaches a minimum predetermined value.

## Claims

1. Device for the domestic exploitation of rain water, which comprises a vertical tank (1) closed at both ends; filling means (4) of the vertical tank with water from the mains, for example a drinking water mains; and a drain (12), **characterised in that** the tank (1) has a submersible hydraulic pump, operated by an electric motor with which it makes up a functional unit (17) completely housed inside the vertical tank (1), whose suction inlet (18) goes through the bottom cover (3) of the tank (1), whereas the drive outlet (19) goes through the top cover (2) of the tank (1); **in that** it comprises a three-way electro-valve (20), arranged below the bottom cover (3) of the tank (1), in which the first channel (21) connects hydraulically with the inside of the tank (1) via its bottom cover, the second channel (22) is adapted for the connection to a rain water pipe which is connected to a rain water tank, and the third channel (23) connects hydraulically with the suction inlet (18) of the pump; and **in that** it comprises a control device (24) that acts on the three-way electro-valve (20), so that given that there is rain water available in the rain water tank, it establishes hydraulic connection between the second (22) and third channels (23) of the electro-valve (20), whereas, otherwise, it establishes hydraulic connection between the first (21) and third channels (23) of the electro-valve (20), feeding the hydraulic pump with water from the vertical tank (1).

2. Device according to claim 1, **characterised in that** the hydraulic pump is a multi-cellular pump.

3. Device according to claim 2, **characterised in that** the filling means of the tank (1) have a two-way valve (4), an inlet one (5) and an outlet one (7), situated inside the vertical tank (1), the inlet channel (5) being adapted for the hydraulic connection with said mains going through the top cover (2) of the vertical tank (1), whereas the outlet (7) flows freely into the inside of the tank (1).

4. Device according to claim 3, **characterised in that** the two-way valve (4) is operated by a ball cock (8), adapted for opening and closing the valve (4) when the water level of the vertical tank reaches a pre-set minimum value (9) and a maximum value (10), respectively.

5. Device according to claim 4, **characterised in that** the outlet (7) of the two-way valve (4) is situated above the maximum water level (10) of the vertical tank (1) set by the ball cock (8).

6. Device according to claim 1, **characterised in that** the drain comprises a vertical tubular pipe (12) inside the tank (1), the top end (13) of which is situated above the maximum water level (10) of the vertical tank (1) set by the ball cock (8), whilst the bottom end (14) goes through the bottom cover (3) of the tank (1).

7. Device according to claim 6 **characterised in that** the bottom end (14) of the vertical tubular conduit (12) of the drain has anti-return means (15).

8. Device according to claim 2 , **characterised in that** at the drive outlet (19) of the pump there is an operating control device (24) of the motor of the hydraulic pump.

9. Device according to claim 8, **characterised in that** the control device (24) has detectors for the existence of the water flow (25), adapted for causing the pump motor to stop when the water flow is zero or less than a predetermined value, and pressure control means (28).

10. Device for the domestic exploitation of rain water according to claim 9, **characterised in that** the pressure control means (28) are adapted for making the pump motor start up, when the water pressure reaches a minimum predetermined value.

## Patentansprüche

1. Vorrichtung für die häusliche Nutzung von Regenwasser, mit einem vertikalen Tank (1), der an beiden Enden geschlossen ist, Einfüllmitteln (4) des vertikalen Tanks zum Füllen mit Wasser aus der Leitung, z. B. einer Trinkwasserleitung, und einem Ablauf (12), **dadurch gekennzeichnet, dass** der Tank (1) eine Tauch-Hydraulikpumpe aufweist, die durch einen Elektromotor betrieben wird, mit dem sie eine Funktionseinheit (17) bildet, die vollständig innerhalb des vertikalen Tanks (1) aufgenommen ist, deren Saugeinlass (18) durch den Bodendeckel (3) des Tanks (1) geht, während der Druckauslass (19) durch den oberen Deckel (2) des Tannes (1) geht, dass sie ein Drei-Wege-Elektroventil (20) umfasst, das unter dem Bodendeckel (3) des Tanks (1) angeordnet ist, bei dem der erste Kanal (21) hydraulisch mit dem Inneren des Tanks (1) durch seinen Bodendeckel verbunden ist, der zweite Kanal (22) für die Verbindung mit einer Regenwasserleitung ausgelegt ist, die mit einem Regenwassertank verbunden ist, und der dritte Kanal (23) hydraulisch mit dem Saugeinlass (18) der Pumpe verbunden ist, und dass sie eine Steuervorrichtung (24) umfasst, die auf das Drei-Wege-Elektroventil (20) einwirkt, sodass, vorausgesetzt dass Regenwasser in dem Regenwassertank verfügbar ist, es eine hydraulische Verbindung zwischen dem zweiten (22) und dritten Kanal (23) des Elektroventils (20) herstellt, während es anderenfalls eine hydraulische Verbindung zwischen dem ersten (21) und dritten Kanal (23) des Elektroventils (20) herstellt, um die Hydraulikpumpe mit Wasser vom vertikalen Tank (1) zu speisen.

2. Vorrichtung nach Anspruch 1, **dadurch gekennzeichnet, dass** die Hydraulikpumpe eine Mehrzellenpumpe ist.

3. Vorrichtung nach Anspruch 2, **dadurch gekennzeichnet, dass** die Einfüllmittel des Tanks (1) ein Zwei-Wege-Ventil (4), einen Einlass (5) und einen Auslass (7) aufweisen, die in dem vertikalen Tank gelegen sind, der Einlasskanal (5) ist für die hydraulische Verbindung mit der Hauptleitung ausgelegt und geht durch den oberen Deckel (2) des vertikalen Tanks (1), während der Auslass (7) frei in das Innere des Tanks (7) mündet.

4. Vorrichtung nach Anspruch 3, **dadurch gekennzeichnet, dass** das Zwei-Wege-Ventil (4) von einem Schwimmerhahn (8) zum Öffnen und Schließen des Ventils (4) betätigt wird, wenn der Wasserpegel des vertikalen Tanks einen voreingestellten Minimalwert (9) bzw. einen Maximalwert (10) erreicht.

5. Vorrichtung nach Anspruch 4, **dadurch gekennzeichnet, dass** der Auslass (7) des Zwei-Wege-Ventils (4) oberhalb des maximalen Wasserpegels (10) des vertikalen Tanks (1) liegt, der durch den Schwimmerhahn (8) eingestellt ist.

6. Vorrichtung nach Anspruch 1, **dadurch gekennzeichnet, dass** der Ablauf eine vertikale, rohrförmige Leitung (12) innerhalb des Tanks (1) umfasst, dessen oberes Ende über dem maximalen Wasserpegel (10) des vertikalen Tanks (1) liegt, der durch den Schwimmerhahn (8) eingestellt ist, während das untere Ende (14) durch den Bodendeckel (3) des Tanks (1) geht.

7. Vorrichtung nach Anspruch 6, **dadurch gekennzeichnet, dass** das bodenseitige Ende (14) der vertikalen rohrförmigen Leitung (12) des Ablaufs Anti-Rückflussmittel (15) aufweist.

8. Vorrichtung nach Anspruch 2, **dadurch gekennzeichnet, dass** es am Druckauslass (19) der Pumpe eine Betriebssteuervorrichtung (24) des Motors der Hydraulikpumpe gibt.

9. Vorrichtung nach Anspruch 8, **dadurch gekennzeichnet, dass** die Steuervorrichtung (24) Detektoren für das Vorliegen einer Wasserströmung (25), die bewirken, dass der Pumpenmotor anhält, wenn der Wasserstrom null oder kleiner als ein vorbestimmter Wert ist, und Drucksteuermittel (28) aufweist.

10. Vorrichtung zur häuslichen Nutzung von Regenwasser nach Anspruch 9, **dadurch gekennzeichnet, dass** die Drucksteuermittel (28) bewirken, dass der Pumpenmotor startet, wenn der Wasserdruck einen minimalen vorbestimmten Wert erreicht.

## Revendications

1. Dispositif pour l'utilisation domestique de l'eau de pluie, qui comprend un réservoir vertical (1) fermé aux deux extrémités ; des moyens de remplissage (4) du réservoir vertical avec de l'eau provenant de la conduite d'eau de la ville, par exemple une conduite d'eau potable de la ville ; et une évacuation (12), **caractérisé en ce que** le réservoir (1) a une pompe hydraulique submersible actionnée par un moteur électrique avec laquelle il constitue une unité fonctionnelle (17) entièrement placée à l'intérieur du réservoir vertical (1), dont l'entrée d'aspiration (18) passe à travers le couvercle inférieur (3) du réservoir (1), alors que la sortie d'entraînement (19) passe à travers le couvercle supérieur (2) du réservoir (1) ; **en ce qu'**il comprend une électrovanne à trois voies (20), agencée sous le couvercle inférieur (3), dans laquelle le premier canal (21) est hydrauliquement relié à l'intérieur du réservoir (1) via son couvercle inférieur, le deuxième canal (22) est adapté pour la connexion à un tuyau de descente des eaux de pluie qui est relié à un réservoir d'eau de pluie et le troisième canal (23) est hydrauliquement relié à l'entrée d'aspiration (18) de la pompe ; et **en ce qu'**il comprend un dispositif de commande (24) qui agit sur l'électrovanne à trois voies (20), de sorte que lorsque de l'eau de pluie est disponible dans le réservoir d'eau de pluie, il établit une connexion hydraulique entre les deuxième (22) et troisième canaux (23) de l'électrovanne (20), alors que, autrement, il établit une connexion hydraulique entre les premier (21) et troisième canaux (23) de l'électrovanne (20), alimentant la pompe hydraulique avec de l'eau provenant du réservoir vertical (1).

2. Dispositif selon la revendication 1, **caractérisé en ce que** la pompe hydraulique est une pompe multicellulaire.

3. Dispositif selon la revendication 2, **caractérisé en ce que** les moyens de remplissage du réservoir (1) ont une vanne à deux voies (4), une voie d'entrée (5) et une voie de sortie (7), située à l'intérieur du réservoir vertical (1), le canal d'entrée (5) étant adapté pour la connexion hydraulique, ladite canalisation d'eau de ville passant à travers le couvercle supérieur (2) du réservoir vertical (1), alors que la sortie (7) s'écoule librement à l'intérieur du réservoir (1).

4. Dispositif selon la revendication 3, **caractérisé en ce que** la vanne à deux voies (4) est actionnée par un robinet à flotteur (8), adapté pour ouvrir et fermer la vanne (4) lorsque le niveau d'eau du réservoir vertical atteint une valeur minimale (9) et une valeur maximale (10) prédéfinies, respectivement.

5. Dispositif selon la revendication 4, **caractérisé en ce que** la sortie (7) de la vanne à deux voies (4) est située au-dessus du niveau d'eau maximal (10) du réservoir vertical (1) défini par le robinet à flotteur (8).

6. Dispositif selon la revendication 1, **caractérisé en ce que** l'évacuation comprend un tuyau tubulaire vertical (12) à l'intérieur du réservoir (1), dont l'extrémité supérieure (13) est située au-dessus du niveau d'eau maximal (10) du réservoir vertical (1) défini par le robinet à flotteur (8), alors que l'extrémité inférieure (14) passe à travers le couvercle inférieur (3) du réservoir (1).

7. Dispositif selon la revendication 6, **caractérisé en ce que** l'extrémité inférieure (14) du conduit tubulaire vertical (12) de l'évacuation a des moyens anti-retour (15).

8. Dispositif selon la revendication 2, **caractérisé en ce qu'**au niveau de la sortie d'entraînement (19) de la pompe il se trouve un dispositif de commande (24) en fonctionnement du moteur de la pompe hydraulique.

9. Dispositif selon la revendication 8, **caractérisé en ce que** le dispositif de commande (24) a des détecteurs pour détecter la présence du flux d'eau (25), adaptés pour amener le moteur de la pompe à s'arrêter lorsque le flux d'eau est nul ou inférieur à une valeur prédéterminée, et des moyens de commande de pression (28).

10. Dispositif pour l'utilisation domestique de l'eau de pluie selon la revendication 9, **caractérisé en ce que** les moyens de commande de pression (28) sont adaptés pour faire démarrer le moteur de la pompe, lorsque la pression d'eau atteint une valeur prédéterminée minimale.
